**Europäisches Patentamt**

**European Patent Office**

**Office européen des brevets**

(19)

(11) Publication number : **0 325 320 B1**

(12)

# EUROPEAN PATENT SPECIFICATION

(45) Date of publication of patent specification :
02.09.92 Bulletin 92/36

(51) Int. Cl.⁵ : **E05F 15/10, F16D 11/10**

(21) Application number : **89200059.7**

(22) Date of filing : **11.01.89**

(54) **An electro-mechanical geared motor unit for door opening devices and the like.**

(30) Priority : **21.01.88 IT 6703488**

(43) Date of publication of application :
**26.07.89 Bulletin 89/30**

(45) Publication of the grant of the patent :
**02.09.92 Bulletin 92/36**

(84) Designated Contracting States :
**AT BE CH DE ES FR GB GR LI LU NL SE**

(56) References cited :
**US-A- 1 544 901**
**US-A- 1 931 655**
**US-A- 3 930 566**

(73) Proprietor : **Bonetto, Claudio**
**Via Exilles 51**
**I-10146 Torino (IT)**
Proprietor : **Bonetto, Luigi**
**Corso Agnelli 102**
**I-10137 Torino (IT)**

(72) Inventor : **Bonetto, Claudio**
**Via Exilles 51**
**I-10146 Torino (IT)**
Inventor : **Bonetto, Luigi**
**Corso Agnelli 102**
**I-10137 Torino (IT)**

(74) Representative : **Robba, Eugenio et al**
**Studio "INTERPATENT" via Caboto 35**
**I-10129 Turin (IT)**

## Description

The present invention relates to an electro-mechanical geared motor unit, in accordance with the preamble of claim 1, to be employed in door opening devices of the type currently used in buses and other vehicles for passengers transport.

It is known that at present the door opening devices widely employed on vehicles for the transport of passengers, such as buses and the like, are in practice compressed air devices associated with suitable limit members and safety switches, with the evident purpose of blocking the door at the end of the displacement and of safeguarding the safety of the possible passengers when closing the door.

For the pertinent prior art reference is made to DE-PS-2 062 135 in the name Wegman-Bode, of December 17th, 1970.

In such devices an axial displacement of the door is always present, at the end of the closing movement or at the beginning of the opening movement, an axial or vertical movement which terminates the closing cycle by blocking the door in position, or which starts the opening cycle by unblocking the door.

Besides the possible considerations about the application of the above device to vehicles for the transport of passengers in which it the above hinted axial movement is not required, it is known that such devices due to the compressed air actuating are not always suitable for a working under optimun conditions; it is sufficient to consider when the temperature drops below a certain value and when the ice (e.g. in a mountain transport vehicle for winter tourism resorts) stops or hinders the regular working of the device.

US-A-1,544,901 discloses another device, namely a transmission or power-conveying agency to be interposed between a door-motor and the door operated thereby for the purpose of providing a yielding drive that will cause the stoppage or reversal of the motor in the event of the door being blocked or obstructed. This transmission is in the nature of a differential, planetary gearing in which the driving pressure reacts yielding upon a stationary abutment, in the event of said pressure exceeding a predetermined limit, and thereby operates the necessary means for stopping or reversing the engine.

This device, substantially mechanical, is of rather large size, difficult to be utilized as a door opening device in actually used buses, and, as similar mechanical devices, it requires a considerable amount of power.

The object of the present invention is to overcome these shortcomings by providing for a substantially electromechanical device which can be used in all kinds of transport vehicle, both with axial displacement and without axial displacement, which supplies the greatest safety as for what concerns the working, at the same time allowing for a release of the door by hand in an emergency situation.

More precisely, the device of the invention is, accordingly characterized by the features in the characterising portion of claim 1, substantially a geared motor unit according to the preamble of claim 1, characterized in that the worm wheel carried idle on the shaft is provided with a flexible coupling, and that the lower face of the wheel is provided with a plurality of radial ribs adapted to match with a plurality of corresponding radial grooves provided on another flat member which is coaxial to and integer with the shaft of the worm wheel; said female grooved flat member being maintained against the lower surface of the worm wheel by resilient means, such as a helical spring, resting on the one hand on the bottom of the case and on the other on the shaft collar of said worm wheel; said shaft being connected at the end opposed to the one carrying the worm wheel, to a fork adapted to engage the upper end of said shaft; the angular displacement of said fork caused by a dedicated lever through a hand grip or Bowden cables located on said lever, causing the lowering of said shift and the consequent lowering of the female flat member fixed to the lower face of the worm wheel, thereby disengaging this latter from the member, so that the shaft of the worm wheel can freely rotate in respect of the wheel which is irreversibly engaged by the worm screw, thus allowing the rotation by hand of the whole assembly.

An additional characteristic of the present invention resides in that the shaft protruding from the gear wheels assembly and producing the door movement comprises an annular coaxial collar provided with radially projecting pins which form as many limit members upon contact with corresponding microswitches; one of them being a closing limit member, another the opening limit member, and another the inhibit limit member for the emergency or movement reversal relay. If, during the closing movement no obstacle is perceived that hinders the closing, the motion reversal circuit is inhibited (disabled) and the closing can take place; in case something is sensed during such movement, even in the phase of contact between the door strip and the doorway, then the sensor associated with such strip intercepts the signal pertaining to the intruding body and activates the motion reversal switch or emergency switch, whereby the door reverses its motion and opens.

A further characteristic of the present invention resides in that the fork engaging the head of the shaft coaxial to the worm wheel is connected to a rod, e.g. a cylindrical rod, horizontally positioned over the case housing the device, with the rotation of said rod by a hand grip -lever or Bowden cables- causing the axial displacement of said shaft and the consequent disengagement (when lowering) or the reengagement (when raising) of the flat member with female radial grooves in respect of the lower face of the male grooved worm wheel.

It is to be noted that the lower male grooved face, engaging the female grooved flat member and making up the lower face of the worm wheel is in effect the lower face of the flexible coupling, i.e. a flat member coupled by means of resilient matching blocks to the upper portion of the worm wheel and integral with this latter thanks to the interposed matching blocks.

A further characteristic of the present invention resides in that the control circuit of the device substantially comprises:

– a direct current motor equipped with permanent magnets and protected against overloads by a self reset current switch;

– a power relay assembly with associated opening and closing relays, with a corresponding pushbutton panel;

– an anticrushing emergency control relay is provided, with an associated inhibit limit switch, fed by a dedicated electronic circuit;

– an electronic circuit fed by a stabilized power supply which is protected against polarity reversal, substantially comprising sensors detecting the (positive and negative) pressure variations, a thermal stability circuit for said sensors, a dynamic compensation circuit for the output signal from said sensors, at least one signal amplifier, two Schmidt triggers (one for the small pressure variations, the other for the larger pressure variations), a combinational logic circuit to analyze the signals from the Schmidt triggers, and an amplifier circuit to control the emergency relay.

The invention will now be disclosed in detail with reference to the drawings relating to a non limiting embodiment, in which:

– Fig. 1 is a plan view of the device of the invention;

– Fig. 2 is a cross section along line II-II in Fig. 1;

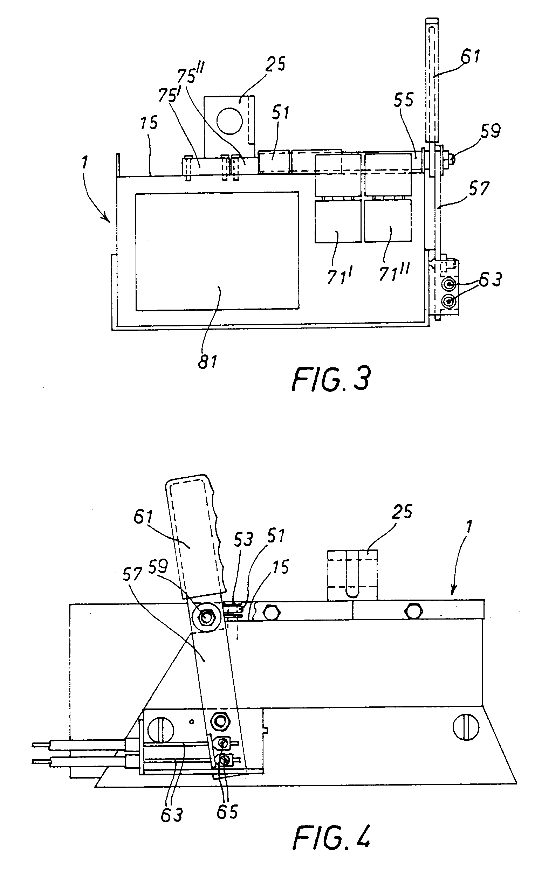

– Fig. 3 is a side view in elevation of the device of the invention;

– Fig. 4 is an outer side view of the device;

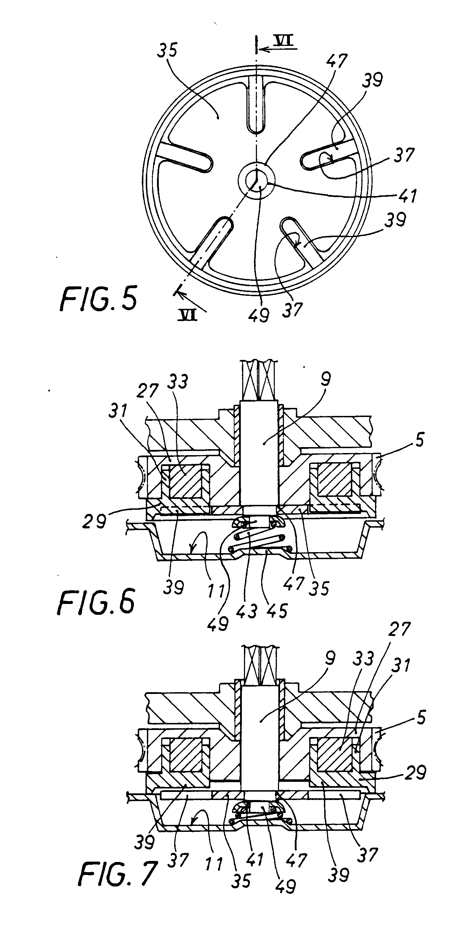

– Fig. 5 is a detailed view of the flat member with radial grooves which is positioned below the worm wheel;

– Fig. 6 is a detailed radial cross section of the worm wheel showing the flexible coupling and the flat member for the engagement and disengagement;

– Fig. 7 is a view similar to that of Fig. 6 with the grooved flat member separated from the bottom of the worm wheel;

– Fig. 8 is a block diagram showing the electric circuit wherein the electronic circuit of such electric circuit is put in evidence.

The device of the invention substantially comprises an electro-mechanical geared motor or ratiomotor unit made up by a boxlike case 1 housing both the mechanical and the electic components.

More particularly, the geared motor unit is of the type providing for a worm screw 3 and a worm (helical) wheel 5, the former being driven by a d.c. electric motor 7 fed by a proper voltage (12 or 24 volts), such as a battery.

An idle shaft 9 is carried by the worm wheel 5, axially extending over the whole assembly lenght, one end of the shaft facing the bottom 11 of the case 1 whereas the other end projects outside of the cover 15 of the case.

The worm wheel 5 deserves particular interest in view of some features that are essential to the present invention and will be further considered later in the disclosure.

Shaft 9 coaxial to the worm wheel 5 carries above this latter a first gear wheel 17 meshing with a second gear wheel 19, above which a third coaxial wheel 21 is carried, meshing in turn with a fourth gear wheel 23 which is coaxial to the output shaft 25 from the geared motor unit.

The shaft 25 is the shaft connected with the door opener arms (not shown), and is driven into rotation at a suitable speed and with a good torque.

Laboratory tests indicate that such values are of 3-4 rpm and of about 21 kgm for the torque.

Of course these values are merely indications and are by no means limiting.

The worm wheel 5 is equipped with a flexible coupling or spring drive: that is it provides for an upper portion 27 carrying on its periphery the helical toothing, and a lower portion 29 which is male fitted into such upper portion 27 and carries a plurality of sectorlike projections 31 matching corresponding sectorlike projections in the upper portion; such sectorlike projections 31, 33, or better the spaces defined by the walls of the projections 31, 33, being filled with a suitable material, such as rubber, adapted to prevent sudden jerks of the worm wheel 5 at the starting.

Such arrangement is known as flexible coupling or spring drive and allows for a start without jerks and abrupt movements.

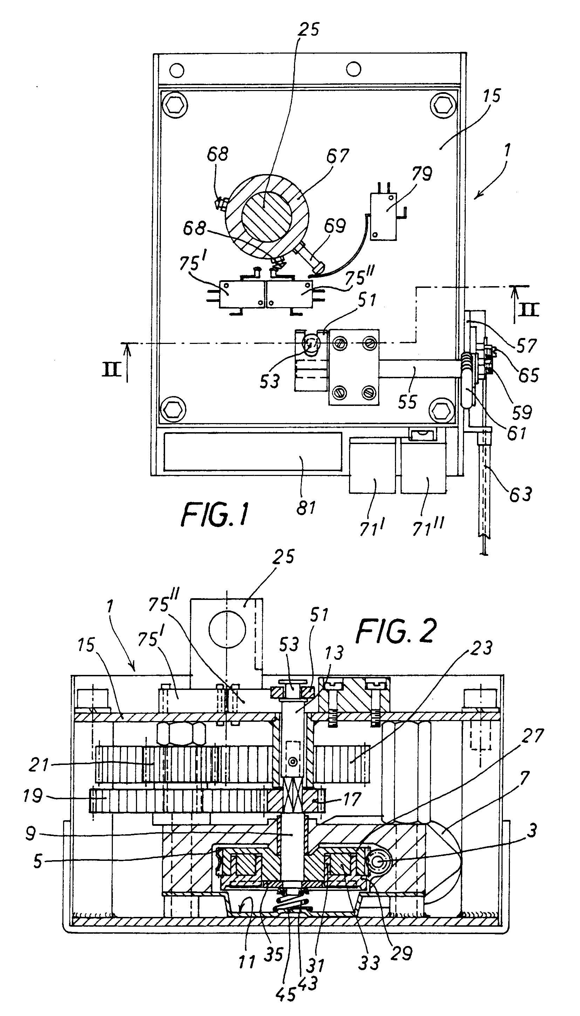

In Fig. 2 the flexible coupling spaces are marked by 33, whereas by 31 are marked the walls of the lower portion 29 of the worm wheel defining such spaces 33.

The lower face of member 29 of the worm wheel 5 is coupled in a male-female arrangement to a further circular flat member 35 provided with radial grooves or slots 37 of suitable lenght, e.g. about 5 mm, adapted to engage corresponding ribs 39 having the same shape that are provided on the lower face of the lower member 29 of the worm wheel 5.

In the exemplary illustrated embodiment, the female grooves 37 are formed on disc 35 whereas the ribs 39 are on the lower face of the lower member 29 of the worm wheel 5, but nothing prevents a reversed arrangement, i.e. grooves on member 29 of the worm wheel 5 and ribs on the flat disc member 35.

The lower end 49 of the shaft 9 passing through the worm wheel 5 projects beyond such flat disc member 35 and abuts against a helical spring 43 in a seat 41, which is axially positioned and resting at 45 over the bottom of the case 1. The shaft 9 is idle in respect of the worm wheel 5, i.e. the members 27 and 29, but it is fastened to the flat disc member 35 onto which it is keyed in 45.

The other portion of shaft 9, as already stated, projects at the top of case 1 at 13, being there engaged at 53 in a fork 51, which fork 51 is rigidly connected to a suitable rod 55, substantially horizontal above the case 1, able to partially rotate and to be manually driven as desired.

This manual control of the partial rotation of the rod 55 is accomplished by means of a lever 57, hinged at 59 and actuated by a suitable hand grip 61 or by Bowden cables 63 at 65.

The assembly lever 57-fork 51-disc member 35 builds up an emergency device which makes it possible a manual opening of the door, either from inside or outside, in case of a real emergency.

A brief description of the working of this device appears proper for a full understanding of its purpose and importance.

Should an emergency situation develop in which the door is blocked due to any reason and must be opened, it is evident that the task cannot be accomplished in a conventional geared motor unit with worm screw and worm wheel, since the motion of such gear is not reversible; on the contrary, in the present case by actuating the hand lever 57, either through the handle grip 61 or the Bowden cables 63, the rod 55 is partially rotated and therefore the fork 51 is engaged with the shaft 9; this way a lowering or axial shifting of said shaft 9 with respect to the gears assembly 17-23 and the worm wheel 5 is accomplished, which causes the lowering of the flat disc member 35 integral with said shaft 9, and the consequent disengagement of the worm wheel 5-worm screw 3 assembly from the gear wheels 17-23 assembly to which the (not shown) arms bearing the door are connected by means of the shaft 25; this way it is possible to easily rotate the said arms without an appreciable effort.

Once the emergency release or disengagement has taken place, returning the lever 57 to the original position by either actuating in reverse direction the hand grip 61 or loosening the tension of the Bowden cables 63, the flat disc member 35 engages again the lower face of the lower member 29 of the worm wheel, and the geared motor unit is again ready for use.

It is evident that the helical spring 43 coaxial to shaft 9 is an additional safety component to ensure the return towards the engagement position of the flat disc member 35 with the worm wheel 5, e.g. in case the Bowden cables are loosened.

Before describing the electric circuit, some particulars are to be further pointed out with reference to figure 1.

The shaft 25 protruding from the assembly of the cylindrical gear wheels 17-23 is provided with a collar 67 from which three radial pins project, namely the pins 68 causing the opening and the closing of the limit relays, and the pin 69 actuating the limit switch of the anticrushing circuit.

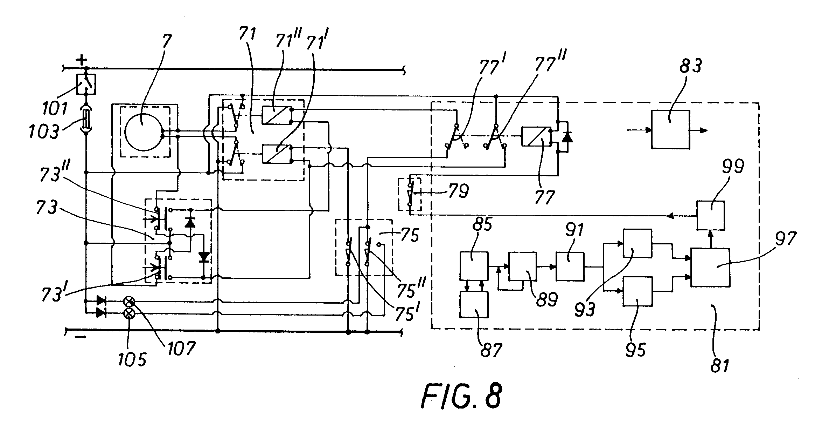

They will be more clearly understood after the explanation of the electric circuit shown in Fig. 8.

Such circuit is connected, as already stated, to a direct current motor 7 with permanent magnets, protected against overloads by a self reset current switch, to which a power relay assembly 71 is connected, made up by an opening relay 71' and a closing relay 71". The circuit is equipped with a control pushbutton panel 73 which includes an opening pushbutton 73' and a closure pushbutton 73". The limit arrangement is designated by 75 and provides for an opening limit switch 75' and a closing limit switch 75".

An emergency control relay for preventing crushing is marked with 77, and the associated switches with 77' and 77", the relay reversing the motion in the closing direction only; the limit switch controlling the anticrushing arrangement is marked with 79.

The relay 77 controlling the emergency anticrushing arrangement is fed by a dedicated electronic circuit shown in the figure at 81.

Such electronic circuit 81 is fed by a dedicated stabilized power supply 83, protected against pole reversal and working at an operating voltage from 6 V to 30 V (indicative values, of course).

The real electronic circuit 81 comprises: a sensor 85 to detect pressure variations (both positive and negative), a thermal stabilizer 87 for sensor 85 to render this latter insensitive to temperature changes in the range from -30° to 100° (indicative values only). Next a device 89 for the dynamic compensation of the output signal from sensor 85 is provided for.

This output signal is amplified in an amplifier 91 followed by two Schmidt triggers 93 and 95 in parallel, trigger 91 being for the small variations of pressure, trigger 95 being for the larger ones. A combinational logic circuit 97 is connected downward of such Schmidt triggers 93, 95, to analyze the conditions of the triggers and detect the emergency situations.

Such emergency situations are detected by circuit 97 and forwarded to the amplifier circuit 99 which controls the emergency relay 77.

The circuit further comprises a vehicle key actuated switch 101, a protection fuse 103, as well as pilot lights 105, 107 signalling the door opening or closing.

Although the working is clearly evident, nevertheless a general description appears to be useful.

By energizing the control panel of the vehicle, a voltage is applied to the circuit and through the stabilized power supply 83, to the electronic circuit 81.

By pressing the opening pushbutton 73' of the pushbutton panel 73, it is energized the opening relay 71' which supplies a positive voltage to a terminal of the motor 7; since the other terminal is grounded through the relay 71", an opening rotation begins which is stopped by the opening limit switch 75'.

The same happens for the closing by pressing the closing pushbutton 73"; in this case switches 71" and 75" are concerned.

Both in the opening and in the closing phase, it is no necessary to maintain pressed the pushbuttons 73' or 73" since relays 71' and 71" are self-energized.

The open or closed condition of the door is signalled to the driver through the two pilot lights 105, 107.

The sensor 85 of the pressure variations of the electronic circuit is connected through a small deformable hose, with the inside of a hollow door strip along the door profile or the doorway.

In the closing phase, should a trapped obstacle compress such a strip, a pressure variation is generated in sensor 85 which detects the same and converts it into a voltage variation which travels unaltered along the circuit 89 and is amplified by the circuit 91, and then applied at the same time to both circuits 93 and 95 known as Schmidt triggers. Such Schmidt triggers alters their status in accordance with the (positive and negative) variations of pressure about a set point, and more precisely trigger 93 is designed for the small (pressure) variations and trigger 95 for the larger ones.

As stated above, the circuit 99 amplifies the signals coming from circuit 97 and raises them to a voltage value enough to drive the emergency relay 77 which reverses the motor rotation through its contacts, thereby immediately opening the door again.

To prevent the compression of the hollow strip from activating the relay 77 through the electronic circuit in the door final closing, the inhibit limit switch 79 blocks the signal from the electronic circuit thus allowing for the complete closing of the door.

The electronic circuit 81 also perform the task of checking the integrity of the hollow door strip and of its connections to the circuit by sensing the large pressure variations generated in the starting phase of the opening (large pressure decrease), and in the final phase of the closing (large pressure increase) since in these two situations the hollow door strip is completely compressed and released.

In case of strip irregularities the above conditions do not occur and the anticrushing safety electronic circuit intervenes on emergency relay 77.

**Claims**

1.  A geared motor unit (1) for door opening devices and the like, substantially comprising a worm screw (3) and a worm wheel (5) assembly carried by a shaft (9) orthogonal to the flat surface of the worm wheel (5) and in turn engaging with an assembly of cylindrical gear wheels (17, 19, 21, 23) from which protrudes the shaft (25) to which are fastened the rotation arms of the door to be driven (opened or closed), the speed reduction of said assembly being substantially due to a first reduction caused by the worm screw(3)-worm wheel (5) assembly, and to a second reduction caused by said four cylindrical gear wheels (17-23) assembly permanetely engaging together, characterized in that the worm wheel (5) carried idle on the shaft (9) is provided with a flexible coupling (27, 31, 33), and that the lower face (29) of the wheel (5) is provided with a plurality of radial ribs (39) adapted to match with a plurality of corresponding radial grooves (37) provided on another flat member (35) which is coaxial to and integer with the shaft (9) of the worm wheel (5); said female grooved flat member (35) being maintained against the lower surface (29) of the worm wheel (5) by resilient means, such as a helical spring (43), resting on the one hand on the bottom (45) of the case and on the other on the collar (47) of the shaft (9) of said worm wheel (5); said shaft (9) being connected at the end opposed to the one carrying the worm wheel, to a fork (51 at 53) adapted to engage the upper end of said shaft (9); the angular displacement of said fork (51) caused by a dedicated lever (57) through a hand grip (61) or Bowden cables (63) located (at 65) on said lever (57), causing the lowering of said shaft (9) and the consequent lowering of the female flat member (35) fixed to the lower face (29) of the worm wheel (5), thereby disengaging this latter from the member, so that the shaft (9) of the worm wheel (5) can freely rotate in respect of the wheel which is irreversibly engaged with the worm screw (3), thus allowing the rotation by hand of the whole assembly.

2.  A geared motor unit for door opening devices and the like as claimed in claim 1, characterized in that the shaft (25) protruding from the gear wheels assembly (17-23) and producing the door movement comprises an annular coaxial collar (67) provided with radially projecting pins (68, 69) which form as many limit members upon contact with corresponding microswitches (75', 75"); one (68) of them being a closing limit member, another (68) the opening limit member, and another (69) the inhibit limit member for the emergency or movement reversal relay (79).

3.  A geared motor unit for door opening devices and the like as claimed in claims 1 or 2, characterized in that the fork (51) engaging (at 53) the head of the shaft (9) coaxial to the worm wheel (5) is connected to a rod (55), e.g. a cylindrical rod, horizontally positioned over the case housing the device (1), with the rotation of said rod (55) by a hand grip (61)-lever or Bowden cables (63)- causing the axial displacement of said shaft (9) and the consequent disengagement (when lowering) or the reengagement (when raising) of the flat member (35) with female radial grooves (37) in respect of the lower face (29) of the male grooved worm wheel (5 at 35).

4. A geared motor unit for door opening devices and the like as claimed in claims 1 to 3, with a control circuit substantially comprising: a direct current motor (7), a power relay assembly (71) with associated relays for the door opening and closing and a related pushbutton panel (73), characterized in that:

    – the direct current motor (7) provides for permanent magnets and is protected against overloads by a self reset current switch;

    – an anticrushing emergency control relay (77) is provided, with associated inhibit limit switch (79), fed by a dedicated electronic circuit (81);

    – said electronic circuit (81) driving the emergency control relay (77), fed by a stabilized power supply (83) which is protected against polarity reversal, substantially comprises sensors (85) detecting the (positive and negative) pressure variations, a thermal stability circuit (87) for said sensors, a dynamic compensation circuit (89) for the output signal from said sensors (85), at least one signal amplifier (91), two Schmidt triggers (93, 95)(one (93) for the small pressure variations, the other (95) for the larger pressure variations), a combinational logic circuit (97) to analyze the signals from the Schmidt triggers (93,95), and an amplifier circuit (99) to control the emergency relay (77).

**Patentansprüche**

1. Getriebe-Motoreinheit für Türöffnungsvorrichtungen und ähnliches, bestehend im wesentlichen aus einer Anordnung mit Schnecke (3) und Schneckenrad (5), die von einer sich rechtwinkling zur ebenen Fläche des Schneckenrades (5) erstreckenden Welle (9) getragen wird und ihrerseits mit einer Anordnung von Stirnrädern (17, 19, 21, 23) in Eingriff steht, von denen die Welle (25) vorsteht, an der die Dreharme der anzutreibenden (zu öffnenden oder zu schliessenden) Tür befestigt sind, wobei die Reduzierung der Geschwindigkeit der genannten Anordnung im wesentlichen aus einer ersten durch die Anordnung mit Schnecke (3) und Schneckenrad (5) hervorgerufenen Reduzierung und einer zweiten durch die Anordnung der dauernd miteinander in Eingriff stehenden vier Stirnräder (17-23) hervorgerufenen Reduzierung besteht, dadurch gekennzeichnet, dass das auf der Welle (9) leerlaufend gelagerte Schneckenrad (5) mit einer elastischen Kupplung (27, 31, 33) und die untere Fläche des Schneckenrads (5) mit einer Vielzahl von radialen Rippen (39) versehen ist, die mit einer Vielzahl von entsprechenden radialen Nuten (37) in Eingriff gebracht werden können, die in einem weiteren ebenen Organ (35) vorgesehen sind, das sich koaxial zur Welle (9) des Schneckenrads (5) erstreckt und mit dieser einstückig ausgebildet ist, wobei das genannte ebene, mit Nuten versehene Nutenteil (35) durch elastische Mittel wie beispielsweise eine Spiralfeder (43) in Anlage an der unteren Fläche (29) des Schneckenrads (5) gehalten wird und die Spiralfeder (43) sich einerseits am Boden (45) des Gehäuses und andererseits an dem Ringbund (47) der Welle (9) des Schneckenrads (5) abstützt, und die die Welle (9) an ihrem dem das Schneckenrad tragenden Ende entgegengesetzten Ende mit einem Gabelstück (51 bei 53) verbunden ist, das an dem oberen Ende der Welle (9) angreift, wobei die Winkelbewegung des Gabelstücks (51), die durch einen diesem zugeordneten Hebel (57) mittels eines Handgriffs (61) oder einen (bei 65) an dem Hebel (57) angebrachten Bowdenzug (63) bewirkt wird, die Abwärtsbewegung der Welle (9) und damit die Abwärtsbewegung des an der unteren Fläche (29) des Schneckenrads (5) befestigten ebenen Nutenteils (35) hervorruft, wodurch das Schneckenrad (5) von dem letzteren gelöst wird, so dass sich die Welle (9) des Schneckenrads (5) frei gegenüber dem Schneckenrad drehen kann, das mit der Schnecke (3) irreversibel gekuppelt ist, so dass die ganze Anordnung von Hand gedreht werden kann.

2. Getriebe-Motoreinheit für Türöffnungsvorrichtungen und ähnliches nach Anspruch 1, dadurch gekennzeichnet, dass die von der Anordnung der Stirnräder (17-23) vorstehende und die Türbewegung hervorrufende Welle (25) einen koaxialen Ringbund (67) aufweist, der mit in radialer Richtung vorstehenden Stiften (68, 69) versehen ist, die bei Berührung mit entsprechenden Mikroschaltern (75′, 75″) je ein Begrenzungsorgan bilden, von denen das eine (68) ein Begrenzungsorgan zum Einschalten, ein anderes (68) ein Begrenzungsorgan zum Ausschalten und ein drittes (69) ein Begrenzungsorgan zum Sperren für das Notschalt- oder Bewegungsumkehrrelais (79) bildet.

**11**       EP 0 325 320 B1       **12**

3. Getriebe-Motoreinheit für Türöffnungsvorrichtungen und ähnliches nach Anspruch 1 oder 2, dadurch gekennzeichnet, dass das Gabelstück (51), das (bei 53) am Kopf der sich koaxial zum Schneckenrad (5) erstreckenden Welle (9) angreift, mit einer Stange (55), beispielsweise einer zylindrischen Stange, verbunden ist, die in horizontaler Richtung über dem Gehäuse angeordnet ist, in dem die Vorrichtung (1) untergebracht ist, wobei die Drehung der Stange (55) mittels eines Handgriffs (61) - über einen Hebel oder Bowdenzug (63) - die axiale Verschiebung der Welle (9) und damit (beim Absenken) das Auskuppeln oder (beim Anheben) das Wiedereinkuppeln des ebenen Nutenorgans (35) mit den radialen Nuten (37) gegenüber der unteren Fläche (29) des mit den vorstehenden Rippen versehenen Schneckenrads (5 bei 35) hervorruft.

4. Getriebe-Motoreinheit für Türöffnungsvorrichtungen und ähnliches nach den Ansprüchen 1 bis 3, mit einer Steuerschaltung, die im wesentlichen umfasst: einen Gleichstrommotor (7), eine Kraftrelaisanordnung (71) mit zugeordneten Relais zum Öffnen und Schliessen der Tür und einer zugeordneten Schalttafel (73) mit Druckknopfschaltern, dadurch gekennzeichnet, dass:

  – der Gleichstrommotor (7) Dauermagnete liefert und durch einen sich selbst zurückstellenden Stromschalter gegen Überlastung geschützt ist;

  – ein Bruchschutz-Notsteuerrelais (77) vorgesehen ist, dem ein Sperr-Begrenzungsschalter (79) zugeordnet ist, der durch eine zugeordnete elektronische Schaltung (81) gespeist wird;

  – die das Notsteuerrelais (77) treibende elektronische Schaltung (81) wird durch eine stabilisierte Stromquelle (83) gespeist, die gegen Umkehrung der Polarität geschützt ist, und besteht im wesentlichen aus Sensoren (85) zur Ermittlung der (positiven und negativen) Druckschwankungen, einer thermischen Stabilitätsschaltung (87) für die Sensoren, einer dynamischen Ausgleichsschaltung (89) für das von den Sensoren (85) kommende Ausgangssignal, wenigstens einem Signalverstärker (91), zwei Schmidt-Auslösern (93, 95) (einem (93) für die kleineren Druckschwankungen, der andere (95) für die grösseren Druckschwankungen), einer logischen Kombinationsschaltung (97) zur Analysierung der von den Schmidt-Auslösern (93, 95) kommenden Signale, und einem Verstärkerkreis (99) zur Steuerung des Notrelais (77).

**Revendications**

1. Un ensemble motoréducteur (1) pour dispositifs d'ouverture de porte et similaires, comprenant essentiellement un ensemble de vis sans fin (3) et de roue à vis (5) porté par un arbre (9) orthogonal à une surface plane de la roue à vis (5) et, à son tour, s'engrenant dans un ensemble de pignons cylindriques (17, 19, 21, 23) desquels ressort l'arbre (25) sur lequel sont fixés les bras de rotation de la porte à commander (ouvrir ou fermer), la réduction de vitesse dudit ensemble étant essentiellement due à une première réduction provoquée par l'ensemble de vis sans fin (3)-roue à vis (5), et à une seconde réduction provoquée par ledit ensemble de quatre pignons cylindriques (17 à 23) s'engrenant en permanence l'une dans l'autre, caractérisé en ce que la roue à vis (5) portée de manière inactive par l'arbre (9) est pourvue d'un accouplement flexible (27, 31, 33) et que la face inférieure (29) de la roue (5) est pourvue d'une pluralité de nervures radiales (39) adaptées pour correspondre à une pluralité de rainures radiales correspondantes (37) prévues dans un autre élément plat (35) qui est coaxial à l'arbre (9) de la roue à vis (5) et solidaire de celui-ci; cet élément plat femelle à rainures (35) étant maintenu contre la surface inférieure (29) du pignon (5) par un moyen résilient, tel qu'un ressort hélicoïdal (43), s'appuyant, d'une part, sur le fond (45) du boîtier et, d'autre part, sur le collier (47) de l'arbre (9) de ladite roue à vis (5); ledit arbre (9) étant relié, à l'extrémitée opposée à celle portant la roue à vis, à une fourche (51, en 53) adaptée pour venir en prise avec l'extrémité supérieure dudit arbre (9); le déplacement angulaire de ladite fourche (51) provoqué par un levier (57) destiné à cet effet, par l'intermédiaire d'une poignée (61), ou des cables de Bowden (63) situés (en 65) sur ledit levier (57), provoquant la descente dudit arbre (9) et la descente qui en résulte de l'élément plat femelle (35) fixé sur la face inférieure (29) de la roue à vis (5), dégageant ainsi cette dernière de l'élément, de manière que l'arbre (9) de la roue à vis (5) puisse tourner librement par rapport à la roue qui s'engrène, de manière irréversible, dans la vis sans fin (3), permettant ainsi la rotation manuelle de tout l'ensemble.

2. Un ensemble motoréducteur (1) pour dispositifs d'ouverture de porte et similaires suivant la revendication 1, caractérisé en ce que l'arbre (25) sortant de l'ensemble de pignons (17 à 23) et produisant le déplacement de la porte comprend un collier coaxial annulaire (67) pourvu de goupilles (68, 69) radialement en saillie qui forment autant d'éléments de limite au contact avec des micro-rupteurs (75', 75'') correspondants, l'un (68) d'eux étant un élément de limite de fermeture, un autre (68) l'élément de limite d'ouverture et un autre (69) l'élément de limite d'inhibition pour le relais d'urgence ou d'inversion de déplacement (79).

3. Un ensemble motoréducteur (1) pour dispositifs d'ouverture de porte et similaires suivant la revendication 1 ou 2, caractérisé en ce que la fourche (51) venant en prise (en 53) avec la tête de l'arbre (9) coaxial à la roue à vis (5) est reliée à une barre (55), par exemple une barre cylindrique, positionnée horizontalement au-dessus du boîtier du dispositif (1), la rotation de ladite barre (55) par une poignée (61) - levier ou câbles de Bowden (63) - provoquant le déplacement axial dudit arbre (9) et le dégagement qui en résulte (lors de la descente) ou le remise en prise (lors de la montée) de l'élément plat (35) avec les rainures radiales femelles (37) par rapport à la face inférieure (29) de la roue à vis mâle à rainures (5, en 35).

4. Un ensemble motoréducteur (1) pour dispositifs d'ouverture de porte et similaires suivant les revendications 1 à 3, avec un circuit de commande comprenant essentiellement: un moteur à courant continu (7), en ensemble de relais de courant (71) à relais associés pour l'ouverture et la fermeture de la porte et un panneau à boutons-poussoirs (73) correspondant, caractérisé en ce que:

   – le moteur à courant continu (7) alimente des aimants permanents et est protégé contre des surcharges par un interrupteur de courant à réenclenchement automatique;

   – il est prévu un relais de commande d'urgence anti-écrasement (77) à interrupteur de fin de course d'inhibition (79) associé alimenté par un circuit électronique (81) destiné à cet effet;

   – ledit circuit électronique (81) commandant le relais de commande d'urgence (77), alimenté par une alimentation de courant stabilisée (83) qui est protégée contre une inversion de polarité, comprend essentiellement des détecteurs (85) détectant les variations de pression (positives et négatives), un circuit de stabilité thermique (85) pour lesdits détecteurs, un circuit de compensation dynamique (89) pour le signal de sortie desdits détecteurs (85), au moins un amplificateur de signal (91), deux déclencheurs de Schmidt (93, 95) (l'un (93) pour les petites variations de pression, l'autre (95) pour les variations de pression plus importantes), un circuit logique de combinaisons (97) pour analyser les signaux des déclencheurs de Schmidt (93, 95) et un circuit amplificateur )99) pour coommander le relais d'urgence (77).

FIG.1

FIG. 2

9

FIG.3

FIG.4

FIG.5

FIG.6

FIG. 7

FIG. 8